# EUROPEAN PATENT APPLICATION

(11) **EP 4 016 974 A1**
(43) Date of publication of application: **22.06.2022**
(21) Application number: 21211447.4
(22) Date of filing: 30.11.2021
(51) Int. Cl.: H04M 1/72409, H04M 1/72463, G06V 20/59, G06V 40/12

(54) **SYSTEM FOR DETERMINING WHEN A DRIVER ACCESSES A COMMUNICATION DEVICE**

(30) Priority: 18.12.2020 US 202017127827
(71) Applicant: Aptiv Technologies Limited, St. Michael (BB)
(72) Inventor: Martindale, Paul R., Carmel, 46032 (US); Welk, Douglas L., Rossville, 46065 (US)
(74) Representative: Manitz Finsterwald Patent- und Rechtsanwaltspartnerschaft mbB

(57) **Abstract**

The techniques of this disclosure relate to a system for modifying access to a communication device. The system includes a controller circuit configured to receive first-feature data generated by a first detector configured to detect identifying features of a driver of a vehicle. The controller circuit is also configured to receive second-feature data generated by a second detector configured to detect identifying features of a user of a communication device. The controller circuit is also configured to determine whether an identifying feature from the first-feature data matches a corresponding identifying feature from the second-feature data. The controller circuit is also configured to modify access to one or more functions of the communication device based on the determination. The system can reduce instances of driver distraction caused by the driver attempting to use the communication device.

## Description

### BACKGROUND

Using communication devices (e.g., a mobile phone) while operating a vehicle may distract the vehicle operator, leading to unsafe driving. Restricting the usage of all communication devices within the vehicle, including the mobile phones of passengers, is not desirable. Solutions for reducing distractions to vehicle operators have been proposed, including hands-free modes of operation, limiting access to a communication device while a vehicle is in motion, and changing a view location from the communication device to a display in a vehicle console. It is possible, however, that a communication device may belong to, or be accessed by, a passenger other than the vehicle operator while the communication device is located in a seating zone of the vehicle. Further, privacy concerns may exist for vehicle operators and passengers regarding vehicle safety systems that seek to determine identities of the users. In response to these concerns, the vehicle operator may deactivate such safety systems to protect their privacy. These possibilities present challenges in determining whether a user of the communication device is also the vehicle operator.

### SUMMARY

This document describes one or more aspects of a system for modifying access to a communication device. In one example, the system includes a controller circuit configured to receive first-feature data generated by a first detector configured to detect identifying features of a driver of a vehicle. The controller circuit is also configured to receive second-feature data generated by a second detector configured to detect identifying features of a user of a communication device. The controller circuit is also configured to determine whether an identifying feature from the first-feature data matches a corresponding identifying feature from the second-feature data. The controller circuit is also configured to modify access to one or more functions of the communication device based on the determination.

In another example, a system includes a controller circuit configured to receive first images from a first camera configured to capture images of a driver of a vehicle. The controller circuit is also configured to receive second images from a second camera configured to capture images of a user of a communication device. The controller circuit is also configured to determine whether the driver of the vehicle is the user of the communication device based on the first images and the second images. The controller circuit is also configured to modify access to one or more functions of the communication device when the driver is determined to be the user.

In another example, a method includes receiving, with a controller circuit, first-feature data generated by a first detector configured to detect identifying features of a driver of a vehicle. The method also includes receiving, with the controller circuit, second-feature data generated by a second detector configured to detect identifying features of a user of a communication device. The method also includes determining, with the controller circuit, whether an identifying feature from the first-feature data matches a corresponding identifying feature from the second-feature data. The method also includes modifying access, with the controller circuit, to one or more functions of the communication device based on the determination.

This summary is provided to introduce aspects of a system for modifying access to a communication device, which is further described below in the Detailed Description and Drawings. For ease of description, the disclosure focuses on vehicle-based or automotive-based systems, such as those that are integrated on vehicles traveling on a roadway. However, the techniques and systems described herein are not limited to vehicle or automotive contexts but also apply to other environments where cameras can be used to detect objects. This summary is not intended to identify essential features of the claimed subject matter, nor is it intended for use in determining the scope of the claimed subject matter.

### BRIEF DESCRIPTION OF THE DRAWINGS

The details of one or more aspects of a system for modifying access to a communication device are described in this document with reference to the following drawings. The same numbers are used throughout the drawings to reference like features and components:
FIG. 1 illustrates an example system for modifying access to a communication device;
FIG. 2 illustrates another example system for modifying access to a communication device using image-based detection with a controller circuit installed on a vehicle;
FIG. 3 illustrates an example logic flow performed by the controller circuit of FIG. 2;
FIG. 4 illustrates example feature vectors transferred to the controller circuit of FIG. 2;
FIG. 5 illustrates another example system for modifying access to a communication device using image-based detection with the controller circuit installed on the communication device;
FIG. 6 illustrates another example system for modifying access to a communication device using image-based detection with the controller circuit located remotely for the vehicle and the communication device;
FIG. 7 illustrates another example system for modifying access to a communication device using image-based detection with a second camera installed on the communication device;
FIG. 8 illustrates an example logic flow performed by the controller circuit of FIG. 7;
FIG. 9 illustrates another example system for modifying access to a communication device using voice-based detection with the controller circuit installed on a mobile phone;
FIG. 10 illustrates another example system for modifying access to a communication device using fingerprint-based detection with the controller circuit installed on a mobile phone;
FIG. 11 illustrates another example system for modifying access to a communication device using eye-based detection with the controller circuit installed on a mobile phone; and
FIG. 12 illustrates a method of using the system of FIG. 2 for modifying access to a communication device.

### DETAILED DESCRIPTION

### OVERVIEW

The techniques of this disclosure relate to a system for modifying access to a communication device. The communication device 12 can be a mobile phone, a tablet, a personal computer, a wearable device such as a watch, eyewear, or a ring, or any other mobile device that allows communication with at least one other device or system. The system receives feature data of a driver of a vehicle and a user of the communication device from separate detectors. The detectors can be cameras or other image sensors, microphones, or touch sensors. The feature data can be an image of a face, dimensions of facial features, fingerprints, voice prints, iris scans, or retinal scans. A first detector can be installed in the vehicle as part of a driver-monitoring system, and a second detector can be installed in the communication device, for example, the camera on a mobile phone. The system compares the separate feature data from each detector and determines whether identifying features of the driver matches corresponding identifying features of the communication device user. The system can restrict access to functions of the communication device when the driver is determined to be the communication device user. In this way, the system modifies access to the communication device (e.g., the mobile phone), functioning as a driver-monitoring system that can reduce instances of distracted driving. The system can protect the privacy of the users by transferring portions of the identifying features rather than transferring an entire data set of the feature data. For example, the detectors can transfer a defined hash of an image of the face of the user, for example, a feature vector, instead of transferring the entire image.

### EXAMPLE SYSTEM

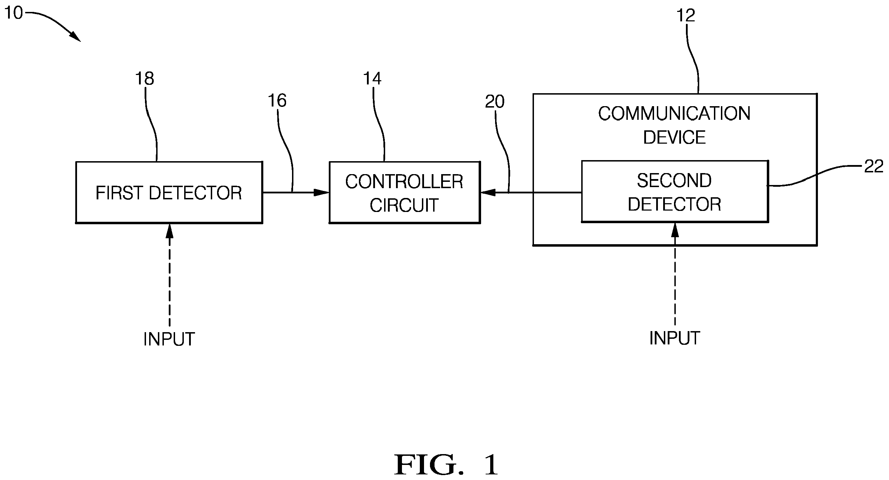

FIG. 1 illustrates an example of a system 10 for modifying access to a communication device 12. The system 10 includes a controller circuit 14 configured to receive first-feature data 16 generated by a first detector 18 and receive second-feature data 20 generated by a second detector 22. The first detector 18 and the second detector 22 have separate inputs based on a type of feature detection being performed, as will be described in the examples below. The controller circuit 14 is configured to determine whether an identifying feature from the first-feature data 16 matches a corresponding identifying feature from the second-feature data 20, as will be described in more detail below. The controller circuit 14 is communicatively coupled to the first detector 18 and the second detector via a transmission link. The transmission link can be a wired or wireless interface, for example, BLUETOOTH ^{®}, Wi-Fi, near field communication (NFC), universal serial bus (USB), universal asynchronous receiver/transmitter (UART), or controller area network (CAN).

### CONTROLLER CIRCUIT

The controller circuit 14 may be implemented as a microprocessor or other control circuitry such as analog and/or digital control circuitry. The control circuitry may include one or more application-specific integrated circuits (ASICs), field-programmable gate arrays (FPGAs) that are programmed to perform the techniques, or one or more general-purpose hardware processors programmed to perform the techniques pursuant to program instructions in firmware, memory, other storage, or a combination. The controller circuit 14 may also combine custom hard-wired logic, ASICs, or FPGAs with custom programming to perform the techniques. The controller circuit 14 may include a memory or storage media (not shown), including non-volatile memory, such as electrically erasable programmable read-only memory (EEPROM) for storing one or more routines, thresholds, and captured data. The EEPROM stores data and allows individual bytes to be erased and reprogrammed by applying programming signals. The controller circuit 14 may include other examples of non-volatile memory, such as flash memory, read-only memory (ROM), programmable read-only memory (PROM), and erasable programmable read-only memory (EPROM). The controller circuit 14 may include volatile memory (e.g., dynamic random-access memory (DRAM), static random-access memory (SRAM)).

The controller circuit 14 can receive data from other vehicle systems via a CAN bus (not shown), for example, an ignition status, a vehicle speed, a vehicle-relative motion, and a transmission gear selection. The one or more routines may be executed by the processor to perform steps for modifying access to the communication device 12 based on signals received by the controller circuit 14 from the first detector 18 and the second detector 22 as described herein.

The first detector 18 can have control circuitry or memory separate from the controller circuit 14 for performing operations specific to the first detector 18. In some examples, the first detector 18 and the controller circuit 14 can share control circuitry or memory. Similarly, the second detector 22 can have control circuitry and memory separate from the communication device 12 or share the control circuitry and memory with the communication device 12.

### IMAGE-BASED DETECTION

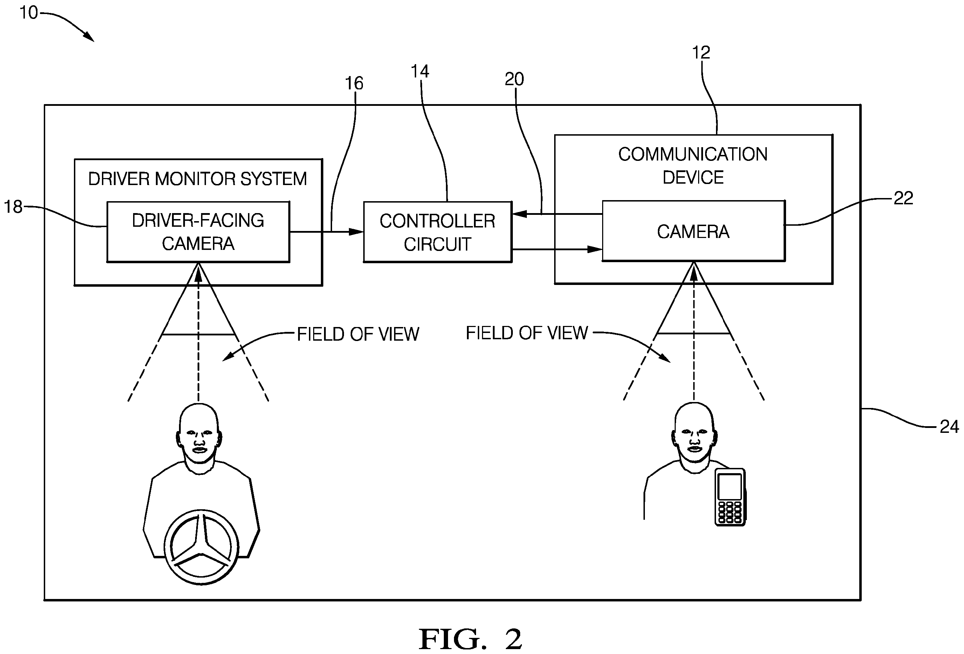

FIG. 2 illustrates an example where the first detector 18 is a driver-facing camera, and the communication device 12 is a mobile phone having a camera as the second detector 22. In this example, the first detector 18 is a component of a driver-monitoring system (DMS) installed on the vehicle 24. The DMS can use the first detector 18 when configured as a driver-facing camera to identify the driver and detect, among other things, driver fatigue or driver distraction. The DMS may perform other functions, for example, alerting the driver when the fatigue or lack of attention exceeds predetermined thresholds. In the example illustrated in FIG. 2, the controller circuit 14 is a component of the vehicle 24 and can be integrated with a body-control module or an engine-control module that may also be a component of the vehicle 24.

The first detector 18 is configured to detect identifying features of a face of the driver of the vehicle 24. For example, acting as the driver-facing camera, the first detector 18 detects features unique to the driver that can be used to distinguish the driver from other passengers in the vehicle 24. The first detector 18 can capture an image of the face of the driver, and the DMS can process the image to determine one or more facial features that are unique to the driver. The DMS can use facial recognition techniques that involve storing a digital image of the driver's face in a memory of the DMS. The facial recognition techniques enable the DMS to pinpoint and measure the facial features captured by the image, for example, a distance between two features (e.g., two parts of a mouth, two ears, two eyes, two pupil centers), a position of a feature (e.g., a placement of a nose relative to other facial features), or a shape of a feature (e.g., a face, a brow, a jaw-line). These measured facial features can be determined by the DMS and transferred to the memory of the controller circuit 14 for later use, as will be explained in more detail below. The driver-facing camera may perform other functions related to the vehicle 24, for example, receiving inputs (e.g., three-dimensional gestures) to a computer interface of the vehicle 24.

The second detector 22 can be a mobile-phone camera that is configured to detect identifying features of a user of the mobile phone. The second detector 22 can capture an image of the face of the communication-device user that can be used to distinguish the communication-device user from other passengers in the vehicle 24. Processors in the mobile phone can process the image to determine facial features that are unique to the communication-device user. The processors in the mobile phone can use similar facial recognition techniques used by the first detector 18, for example, that involve storing a digital image of the user's face in the memory of the mobile phone. These facial recognition techniques can pinpoint and measure the facial features captured by the image, for example, a distance between two features, a position of a feature, or a shape of a feature of the communication-device user. These measured facial features can be determined and stored in the memory of the mobile phone and transferred to the controller circuit 14 for comparison to the facial features transferred from the DMS.

### EXAMPLE LOGIC FLOW

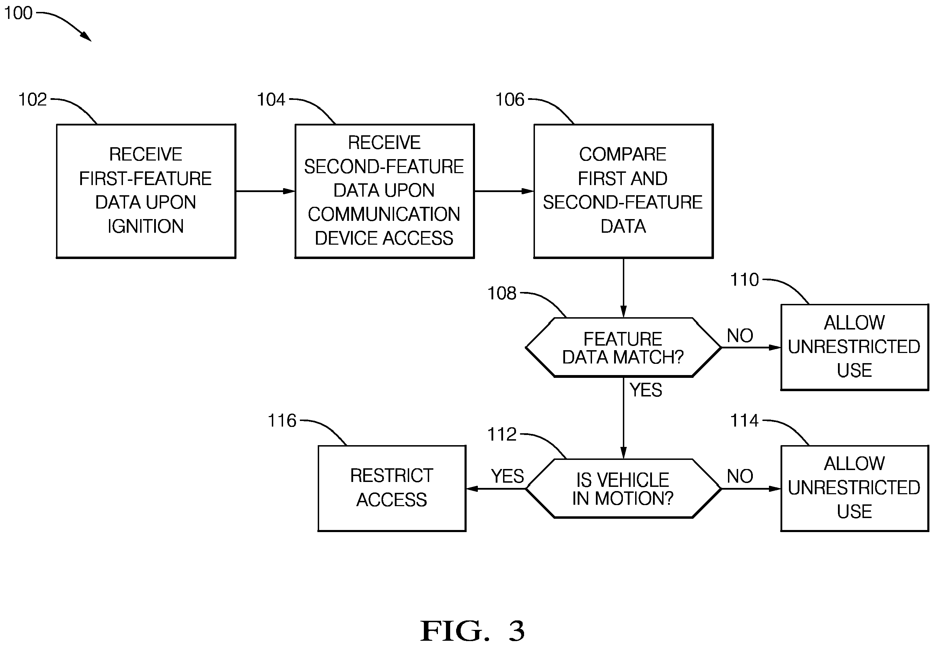

FIG. 3 is an example flow diagram illustrating an example logic flow 100 performed by the controller circuit 14 of FIG. 2. The logic flow starts at 102 with receiving the first-feature data upon vehicle ignition and ending at 116 with restricting access to the communication device 12. In this example, at 102, upon the driver entering the vehicle 24 and actuating a vehicle ignition switch, the DMS determines the first-feature data 16 from the driver-facing camera and transfers the first-feature data 16 to the controller circuit 14 via the transmission link. At 104, upon the communication-device user accessing the communication device 12 by pressing a home, a wake-up switch, or entering a security code, the communication device 12 determines the second-feature data 20 from the communication-device camera and transfers the second-feature data 20 to the controller circuit 14 via the corresponding transmission link. At 106, the controller circuit 14 compares the feature data received from the driver-facing camera to the feature data received from the communication device 12. The comparison can include determining a difference between the measured feature data from each of the detectors, for example, subtracting the distance between pupil centers of the driver from the distance between the pupil centers of the communication-device user. At 108, the controller circuit 14 determines whether the features of the driver match the corresponding features of the communication-device user. For example, if the distance between pupil centers of the driver is determined to be the same as the distance between the pupil centers of the communication-device user, the controller circuit 14 may determine that the driver and the communication-device user are the same person. It will be appreciated that the controller circuit 14 can make the determination based on allowable tolerances to compensate for measurement errors that may result from using the separate detectors. In some examples, the controller circuit 14 uses a single feature from the feature data for comparison (e.g., the distance between pupil centers or a placement of the nose relative to other facial features). In other examples, the controller circuit 14 uses two or more features from the feature data for comparison (e.g., the distance between pupil centers, a placement of the nose relative to other facial features, and a shape of the jaw-line). If the feature data does not match, at 110, the controller circuit 14 allows unrestricted use of the communication device 12. If the feature does match, at 112, the controller circuit 14 determines whether the vehicle 24 is in motion based on signals received via the CAN bus, for example, based on signals received from an inertial measurement unit (IMU) or a speed sensor installed on the vehicle or on the communication device 12. If the vehicle 24 is not in motion, at 114, the controller circuit 14 allows unrestricted use of the communication device 12. If the vehicle 24 is in motion, at 116, the controller circuit 14 restricts the use of the communication device 12.

### MODIFYING ACCESS TO THE COMMUNICATION DEVICE

The controller circuit 14 is configured to modify access to one or more functions of the communication device 12 based on whether the driver is determined to be the communication-device user. The controller circuit 14 allows full or unlimited access to the one or more functions of the communication device 12 when the controller circuit 14 determines that the driver is not the communication-device user. Conversely, the controller circuit 14 can restrict access to the one or more functions of the communication device 12 when the controller circuit 14 determines that the driver is the communication-device user. In some examples, the controller circuit 14 modifies access to the communication device 12 only when the vehicle 24 is in motion, as illustrated in step 112 of the logic flow of FIG. 3. In other examples, the controller circuit 14 modifies the access to the communication device 12 at all times when the vehicle 24 is powered on and in traffic, for example, when the vehicle is stopped at a traffic light, as local traffic regulations may restrict the use of communication devices 12 under all driving scenarios.

The controller circuit 14 can determine which levels of access may be allowable by the local traffic regulations by comparing a geographic position of the vehicle 24 to a database that includes the communication device 12 restrictions for respective localities. The geographic position of the vehicle 24 can be obtained by the controller circuit 14 via a global navigation satellite system (GNSS) transceiver that may be installed on the vehicle 24 and accessed by the controller circuit 14, for example, via the CAN bus. The database can be stored in the memory of the controller circuit 14 or may be stored in a cloud storage facility that is accessed by the controller circuit 14 via a wireless transceiver.

The controller circuit 14 can modify the access by controlling connectivity between the communication device 12 and a cellular network or an internet connection that may be accessed by the communication device 12 through a vehicle infotainment system. The controller circuit 14 can restrict access to text messaging via the communication device 12, multimedia messaging services (MMS), or applications that may be installed on the mobile device, for example, messaging applications, email, and social media applications. The controller circuit 14 can allow incoming messages to be displayed via the communication device 12 but restrict outgoing messages from being transmitted by the communication device 12. The controller circuit 14 can modify the access by activating a "Do Not Disturb While Driving," or driving mode, that may be installed on the communication device 12. In some examples, the driving mode setting of the communication device 12 disables specific functions, for example, short message services (SMS) or text messaging, and incoming calls. Other features may be restricted based on the communication device 12 manufacturer's settings or elections made by the communication-device user.

In some examples, the controller circuit 14 that is installed on the vehicle 24 may not be authorized to modify access to one or more functions of the communication device 12. In these examples, the controller circuit 14 can transfer messages to the communication device 12 via the transmission link related to the outcome of the feature matching. For example, when the controller circuit 14 determines that the driver is the communication-device user, the controller circuit 14 can transfer this determination to the communication device 12, and the control circuitry in the communication device 12 can restrict the driver's access to the communication device 12. When the controller circuit 14 determines that the driver is not the communication-device user, the controller circuit 14 can either transfer this determination to the communication device 12, where the control circuitry in the communication device 12 can allow the communication-device user unrestricted access to the communication device 12, or the controller circuit 14 can refrain from sending the message, where a default setting within the communication device 12 allows unrestricted access when no message from the controller circuit 14 is received.

### USER PRIVACY PROTECTION

To protect the privacy of the users, the system 10 can be configured to generate and transfer defined key feature data, or feature vectors, between the detectors and the controller circuit 14, as opposed to transferring the complete image files. This aspect of the system 10 ensures that the images captured by the detectors remain in the respective devices and are not transferred between different processors. The feature vectors can be numerical representations of the image that map the features of the face. The feature vectors can include first-order features (e.g., face height, face width, width of lips) and can include second-order features (e.g., a ratio of the face height to the face width, a ratio of the distance between pupil centers to a distance between corners of the mouth).

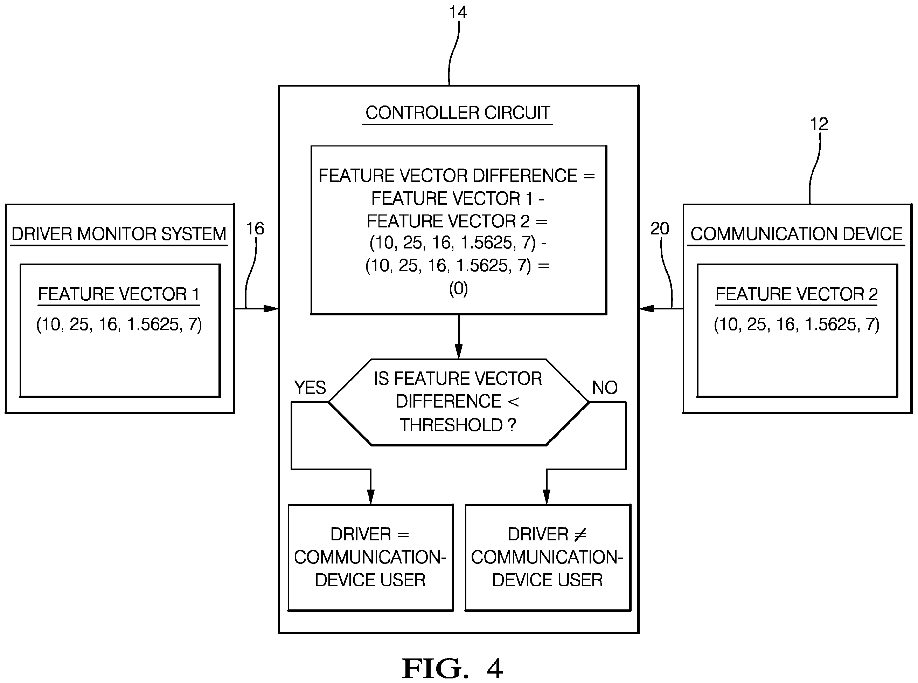

FIG. 4 illustrates example feature vectors generated separately by the facial recognition software in the DMS and the communication device 12, which may be a mobile phone. These example feature vectors are numeric arrays of the measurements of the example defined key facial features shown in Table 1 below. It will be appreciated that the key facial features can be any facial features or ratios of facial features. In the example illustrated in FIG. 4, the driver is the communication-device user, and the values from the DMS and the communication device 12 are shown to be equivalent. The generated feature vectors are transferred to the controller circuit 14, where the controller circuit 14 compares the feature vectors by, for example, subtracting Feature Vector 1 from Feature Vector 2, yielding a Feature Vector Difference of zero. The differences between feature vectors can be determined in different ways, for example, using a sum of the absolute differences between individual elements in the vectors (e.g., ∥*a*0-*b*0∥ + ∥*a*1-*b*1∥ + ...+ ∥*a*n-*b*n∥), or a square root of the sum of the squares of the differences between the individual elements in the vectors (e.g., sqrt[(*a*0-*b*0)² + (*a*1*-b*1)² + ...+ (*a*n-*b*n)²]), where *a* and *b* are the feature vector elements and n is the number of feature elements in the feature vector. In this example, the controller circuit 14 determines that the Feature Vector Difference is less than a threshold and determines that the driver is the communication-device user. The thresholds can be static thresholds or dynamic thresholds and can be based on a repeatability of the detectors as defined by the detector manufacturer's specifications. To further protect the privacy of the users, the feature vectors can be encrypted by the DMS and the communication device 12 before transferring to the controller circuit 14, and the controller circuit 14 can decode the encryptions using an encryption key. The system 10 can use any known encryption algorithms, for example, Advanced Encryption Standard (AES), Rivest-Shamir-Adleman (RSA), and Twofish.

**TABLE 1. EXAMPLE DEFINED KEY FACIAL FEATURES**

| KEY FACIAL FEATURE | DMS VALUES | COMMUNICATION DEVICE VALUES |
|---|---|---|
| DISTANCE BETWEEN PUPILS (CM) | 10 | 10 |
| FACE HEIGHT (CM) | 25 | 25 |
| FACE WIDTH (CM) | 16 | 16 |
| RATIO OF FACE HEIGHT/FACE WIDTH | 1.5625 | 1.5625 |
| EAR HEIGHT (CM) | 7 | 7 |

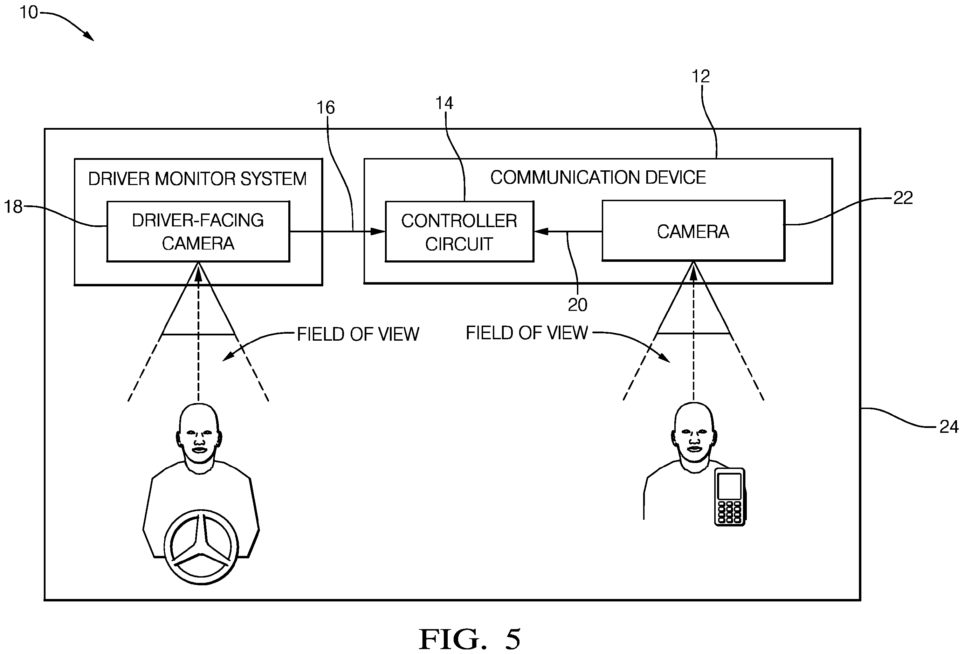

FIG. 5 illustrates another example of the system 10 using image-based detection with controller circuit 14 being installed on the communication device 12. In this example, the DMS transfers the feature vector to the communication device 12, where the comparison of the feature vectors is performed by the communication device 12 processors. The control circuitry in the communication device 12 can restrict access to the communication device 12 based on the comparison, as described above.

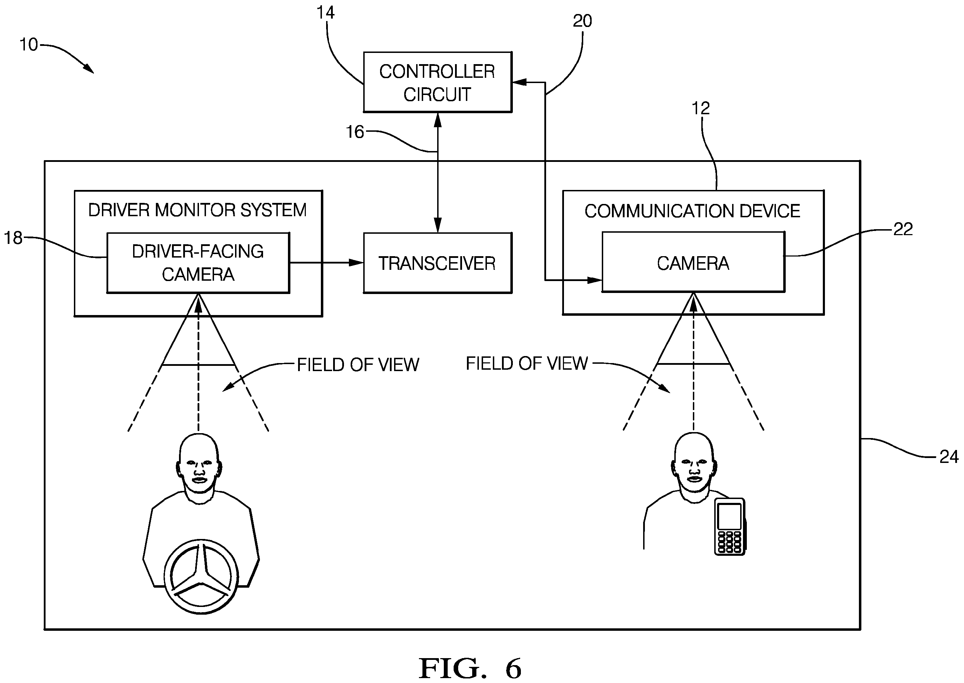

FIG. 6 illustrates yet another example of the system 10 using image-based detection with controller circuit 14 being located remotely from both the vehicle 24 and the communication device 12, for example, at a monitoring facility or a cloud computing center. The feature vector from the DMS is transferred to the controller circuit 14 via a wireless transceiver that can be a component of the vehicle's 24 infotainment system, while the feature vector from the communication device 12 can be transferred via the communication device's 12 cellular network. In this example, the feature vectors may be encrypted before transferring to the controller circuit 14 for privacy protection, as described above. In this example, the controller circuit 14 sends a message to the communication device 12 with the determination of the comparison, and the control circuitry in the communication device 12 can restrict access to the communication device 12 based on the comparison, as described above.

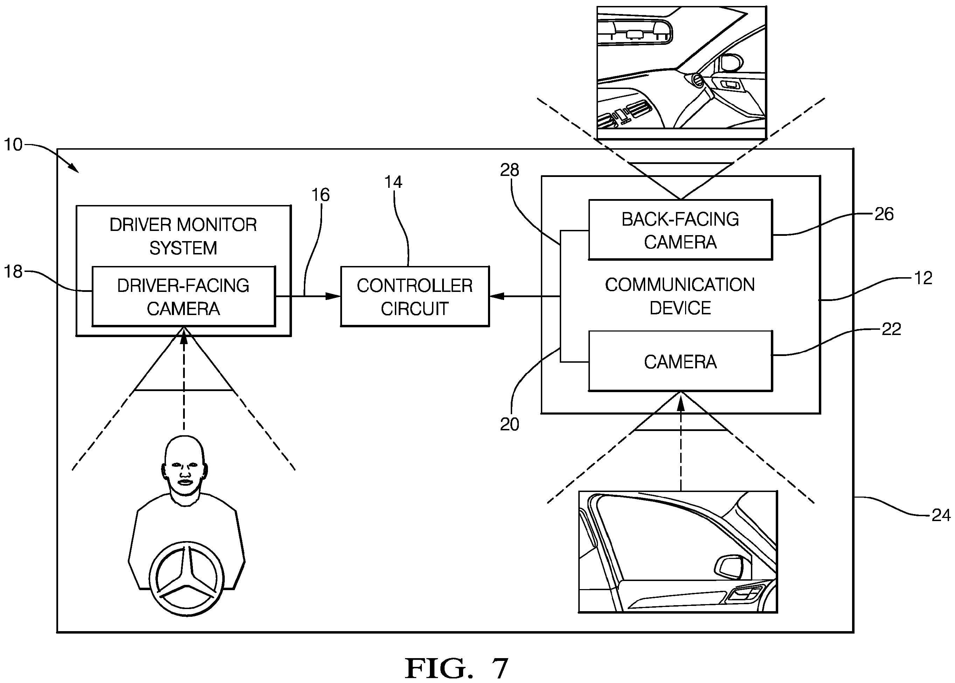

FIG. 7 illustrates yet another example of the system 10 using image-based detection where the communication device 12 includes a third detector 26 being a camera located on a back side of the communication device 12, hereafter referred to as a back-facing camera. The fields of view of the communication device's 12 camera and back-facing camera are 180 degrees opposed to one another and can be indicative of a seating position within the vehicle 24 from where the communication device 12 is being accessed. In this example, the driver-facing camera detects the image of the driver's face upon the driver actuating the vehicle ignition. The DMS determines the feature vector and transfers the feature vector to the controller circuit 14. Upon the user accessing the communication device 12, the communication device 12 transfers the feature vectors associated with the images in the fields of view of the communication device 12 cameras to the controller circuit 14 for comparison. In the example illustrated in FIG. 7, the image in the field of view of the back-facing camera is that of a passenger-side of the vehicle cabin, and the image in the field of view of the camera is that of the driver's side window and door, neither of which include the image of the driver's face. The communication device 12 camera may not capture the image of the driver's face due to the communication device 12 being placed in a position such that the driver's face is outside of the camera's field of view. As a result of the communication device's 12 inability to capture the image of the driver's face, the controller circuit 14 determines that the feature vector from the DMS does not match the feature vectors from the communication device 12 and evaluates an environment detected by the cameras on the communication device 12.

Referring again to FIG. 7, the two images captured by the communication device 12 are indicative of the communication device 12 being near the driver's seat, albeit from different points of view. In other words, the image captured by the back-facing camera corresponds to the image captured by the camera with a rotation angle of 180 degrees and indicates that the communication device 12 is positioned at or near the driver's seat and may be accessible to the driver. When the controller circuit 14 determines that the feature vector from the DMS does not match the feature vectors from the communication device 12, the controller circuit 14 is further configured to compare the feature vectors from the communication device 12 to feature vectors from a library of images that map the vehicle cabin. The controller circuit 14 can include feature vectors of images stored in the memory that represent a 360-degree field of view from respective seating positions within the vehicle cabin. These stored feature vectors can be used by the controller circuit 14 to compare to the feature vectors received from the communication device 12 and determine the location of the communication device 12 based on environments detected by both cameras on the communication device 12.

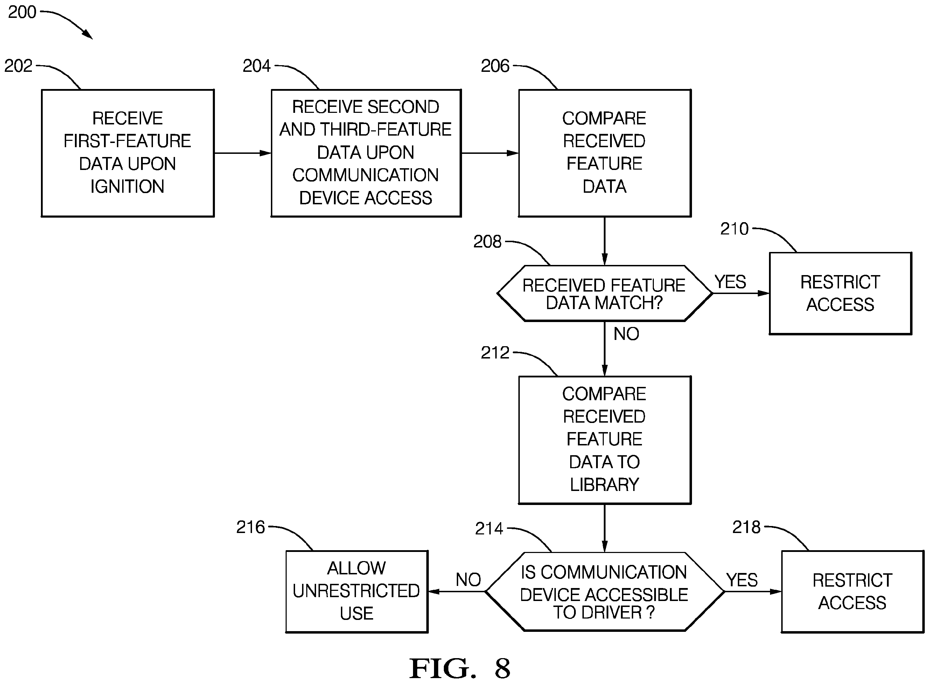

FIG. 8 is an example flow diagram illustrating an example logic flow 200 performed by the controller circuit 14 of FIG. 7. The logic flow starts at 202 with receiving the first-feature data upon ignition and ending at 218 with restricting access to the communication device 12. In this example, at 202, upon the driver actuating the vehicle ignition switch inside the vehicle 24, the DMS determines the first-feature data 16 from the driver-facing camera and transfers the first-feature data 16 to the controller circuit 14 via the transmission link. At 204, upon the communication-device user accessing the communication device 12, the communication device 12 determines the second-feature data 20 and third-feature data 28 from the communication-device camera and back-facing camera and transfers the second-feature data 20 and third-feature data 28 to the controller circuit 14 via the corresponding transmission link. At 206, the controller circuit 14 compares the feature data received from the driver-facing camera to the feature data received from the communication device 12. The comparison can include determining the difference between the measured feature data from each of the detectors, as described above. At 208, the controller circuit 14 determines whether the features of the driver match the corresponding features of the communication-device user, as described above. If the feature data matches, at 210, the controller circuit 14 restricts access to the communication device 12. If the feature does not match, at 212, the controller circuit 14 compares the second-feature data 20 and third-feature data 28 to the feature data from the library of cabin images stored in the memory of the controller circuit 14. At 214, the controller circuit 14 determines whether the position of the communication device 12 is accessible to the driver based on the library of cabin images. If the controller circuit 14 determines that the position of the communication device 12 is not accessible to the driver, at 216, the controller circuit 14 allows unrestricted use of the communication device 12. If the controller circuit 14 determines that the position of the communication device 12 is accessible to the driver, at 218, the controller circuit 14 restricts the use of the communication device 12.

### OTHER EXAMPLE DETECTORS

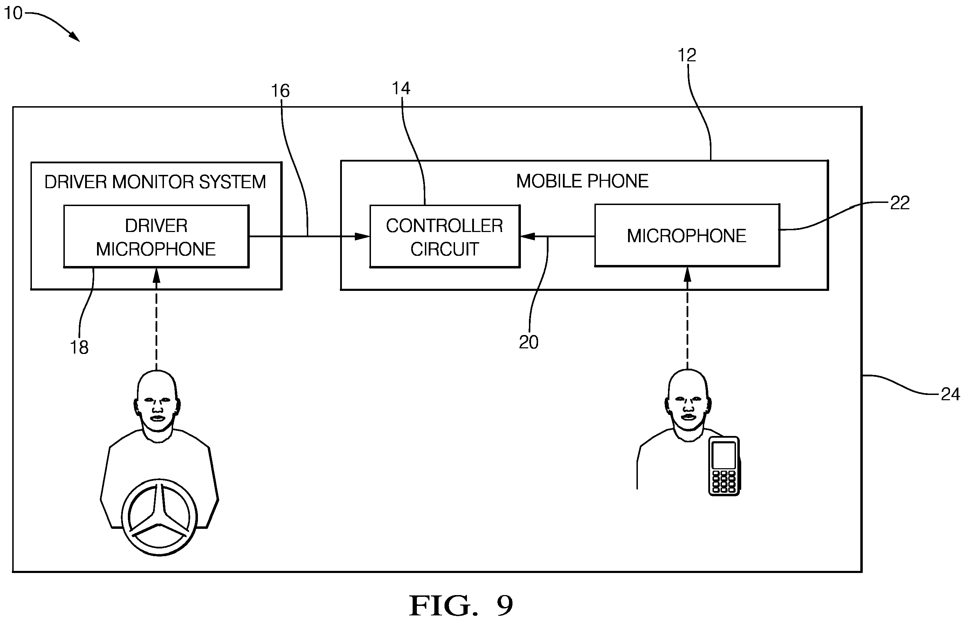

The examples described above are related to cameras detecting an image of the face of the driver and the mobile-phone user. In other examples, the system 10 can be configured with other inputs that detect other identifying features that can be used to determine whether the driver is attempting to use the communication device 12. The example systems shown in FIGS. 9 - 11 illustrate other detectors having different input devices that can detect other identifying features. The system architecture and logic flows are similar to the examples illustrated in FIGS. 2, 5, and 6, except for the different detectors and corresponding control circuitry to operate the different detectors. The example systems 10 shown in FIGS. 9 - 11 are triggered upon the driver actuating the ignition switch inside the vehicle 24 and the mobile-phone user accessing the mobile phone, as described in the examples above. In the examples shown below, the controller circuit 14 is a component of the communication device (e.g., the mobile phone). It will be understood that the controller circuit 14 can be included in the vehicle 24 or located remotely, as described in the examples above.

### VOICE-BASED DETECTION

FIG. 9 illustrates an example where the identifying features include voices of the driver and mobile-phone user. In this example, the first detector 18 and the second detector 22 are microphones installed on the vehicle 24 and the mobile phone that respectively detect the voice of the driver and the mobile-phone user. The DMS and the mobile phone can use voice recognition software to process voice recordings to determine the identifying features that are unique to the detected voices and generate feature vectors based on these identifying features. In some examples, the voice recognition software uses a text-dependent approach where a passphrase spoken by the user is compared to a recording of the passphrase stored in the memory of the controller circuit 14. In other examples, the voice recognition software uses a text-independent approach where the driver can speak freely to the system 10, and the software learns the user's speech utterances over time. The identifying features of the feature vector can include various components extracted from an acoustic wave speech signal, for example, amplitudes and frequencies from particular bandwidths, formant frequencies or resonances in the frequency spectrum, pitch contours or variations in a fundamental frequency, and coarticulation in which the speech organs prepare to produce the next sound while transitioning from a previous sound. The controller circuit 14 compares the voice-based feature vectors, determines whether the voice of the driver is the voice of the mobile-phone user, and modifies access to the mobile phone based on the determination.

### FINGERPRINT-BASED DETECTION

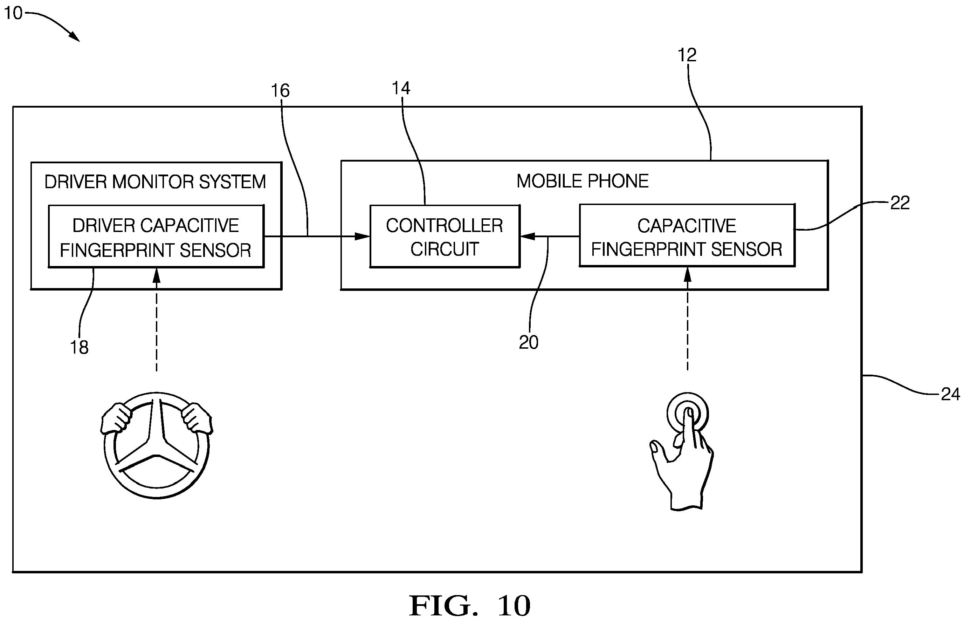

FIG. 10 illustrates an example where the identifying features include fingerprints of the driver and mobile-phone user. In this example, the first detector 18 and the second detector 22 are capacitive fingerprint sensors installed on the vehicle 24 (e.g., on the steering wheel or ignition switch) and on the mobile phone (e.g., a home button). The capacitive fingerprint sensors can detect the fingerprint of the driver and the mobile-phone user. The DMS and the mobile phone can use fingerprint recognition software to process the fingerprints to determine the identifying features that are unique to the detected fingerprints and generate feature vectors based on these identifying features. The identifying features of the feature vector can include various components extracted from the fingerprint, for example, ridge endings and ridge bifurcations. The controller circuit 14 compares the fingerprint-based feature vectors and determines whether the fingerprint of the driver is the fingerprint of the mobile-phone user and modifies access to the mobile phone based on the determination.

### EYE-BASED DETECTION

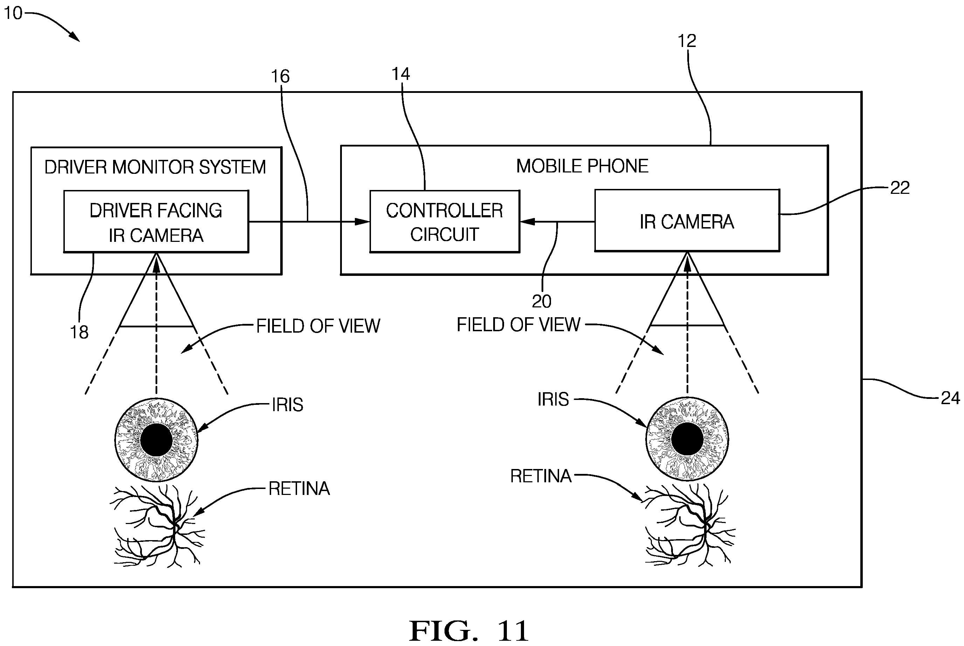

FIG. 11 illustrates an example where the identifying features include eyes of the driver and mobile-phone user. In this example, the first detector 18 and the second detector 22 are infrared cameras (IR cameras), and the eyes are illuminated with light in the near-IR spectrum by IR illuminators located in the vehicle cabin and on the mobile phone. In some examples, the DMS and mobile phone can use iris recognition software that processes images of the iris of one or both eyes. In other examples, the DMS and mobile phone can use retinal recognition software that processes images of the retina of one or both eyes. The identifying features of the feature vector can include various components extracted from the patterns of the iris or retina using known methods of feature extraction, for example, Gabor filters to extract frequency content, discrete wavelet transform (DWT), discrete cosine transform (DCT), or Harr wavelet transform (HWT). The controller circuit 14 compares the eye-based feature vectors, determines whether the eye of the driver is the eye of the mobile-phone user, and modifies access to the mobile phone based on the determination.

### EXAMPLE METHOD

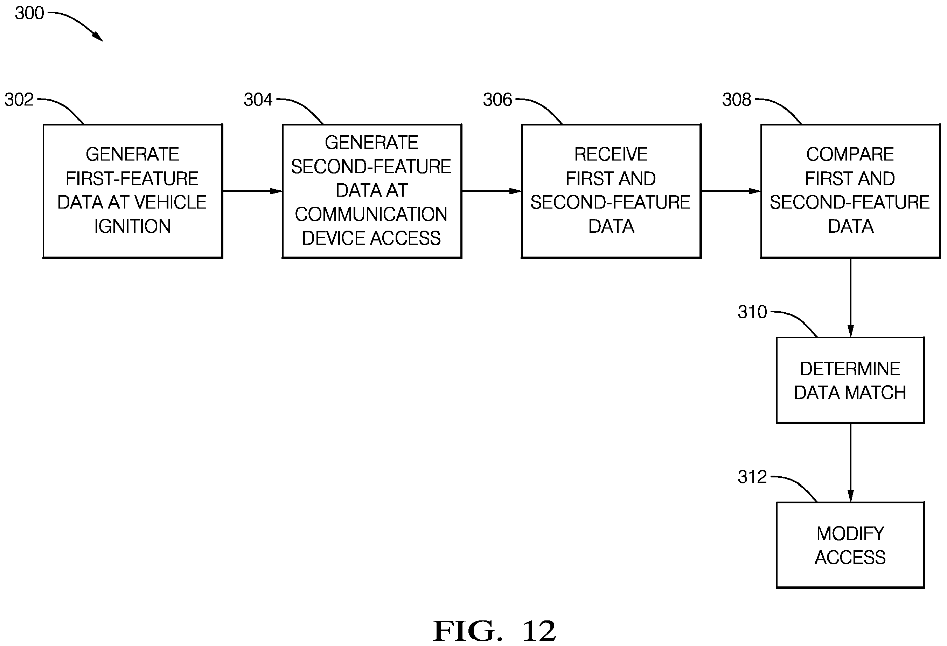

FIG. 12 illustrates example methods 300 performed by the system 10. For example, the controller circuit 14 configures the system 10 to perform operations 302 through 312 by executing instructions associated with the controller circuit 14. The operations (or steps) 302 through 312 are performed but not necessarily limited to the order or combinations in which the operations are shown herein. Further, any of one or more of the operations may be repeated, combined, or reorganized to provide other operations.

Step 302 includes GENERATE FIRST-FEATURE DATA AT VEHICLE IGNITION. This can include generating, with the driver-facing camera of the DMS, the first-feature data that includes the identifying features of the driver's face when the driver enters the vehicle and activates the vehicle ignition. The driver-facing camera captures the image of the driver's face, and the DMS uses facial recognition software to measure defined key facial features, as shown in Table 1 above. The DMS uses the key facial features to generate a feature vector of the driver's face for transferring to the controller circuit 14 so that the driver's image remains in the DMS for privacy reasons, as described above. The feature vector is a numerical representation of the image that maps the features of the face. The feature vectors can include first- and second-order features, as described above.

Step 304 includes GENERATE SECOND-FEATURE DATA AT COMMUNICATION DEVICE ACCESS. This can include generating, with the mobile phone, the second-feature data that includes the identifying features of the communication-device user's face when the communication-device user accesses the mobile phone. The communication-device camera captures the image of the face of the communication-device user when the user activates or awakens the mobile phone. Processors in the mobile phone use facial-recognition software to measure the defined key facial features and generate a feature vector of the communication-device user's face for transferring to the controller circuit 14 so that the user's image remains in the mobile phone for privacy reasons, as described above.

Step 306 includes RECEIVE FIRST AND SECOND FEATURE DATA. This can include receiving, with the controller circuit 14, the first-feature data 16 generated by the DMS and the second-feature data 20 generated by the mobile phone. The DMS and the mobile phone transfer the respective feature vectors to the controller circuit 14 via the transmission links, as described above. The controller circuit 14 stores the respective feature vectors in the memory for comparison.

Step 308 includes COMPARE FIRST AND SECOND FEATURE DATA. This can include comparing, with the controller circuit 14, the feature vector received from the DMS to the feature vector received from the mobile phone. The feature vectors can be compared by determining differences between the feature vectors, for example, using a sum of the absolute differences between individual elements in the feature vectors, or a square root of the sum of the squares of the differences between the individual elements in the feature vectors, as described above.

Step 310 includes DETERMINE DATA MATCH. This can include determining, with the controller circuit 14, whether the feature vector received from the DMS matches the feature vector received from the mobile phone, as described above. The controller circuit 14 compares the difference between the feature vectors to a threshold to determine whether the feature vectors match. When the difference between the feature vectors is less than the threshold, the controller circuit 14 determines that the driver is the communication-device user, and when the difference between the feature vectors is greater than the threshold, the controller circuit 14 determines that the driver is not the communication-device user. The thresholds can be static thresholds or dynamic thresholds and can be based on a repeatability of the detectors as defined by the detector manufacturer's specifications.

Step 312 includes MODIFY ACCESS. This can include modifying access, with the controller circuit 14, to one or more functions of the mobile phone based on the determination of whether the driver is the communication-device user. The controller circuit 14 allows full access to the one or more functions of the mobile phone when the controller circuit 14 determines that the driver is not the communication-device user. The controller circuit 14 restricts access to the one or more functions of the mobile phone when the controller circuit 14 determines that the driver is the communication-device user, as described above. The controller circuit 14 can modify access to the mobile phone when the vehicle 24 is in motion or modify the access at all times when the vehicle 24 is powered on and in traffic, as described above. The controller circuit 14 can modify the access by controlling connectivity between the mobile phone and a cellular network or an internet connection that may be accessed by the mobile phone through the vehicle's infotainment system, as described above. When the controller circuit 14 is separate from the mobile phone and not authorized to modify access, the controller circuit 14 can transfer messages to the mobile phone via the transmission link, whereby processors in the mobile phone can modify the driver's access.

### EXAMPLES

In the following section, examples are provided.

Example 1. A system, comprising: a controller circuit configured to: receive first-feature data generated by a first detector configured to detect identifying features of a driver of a vehicle; receive second-feature data generated by a second detector configured to detect identifying features of a user of a communication device; determine whether an identifying feature from the first-feature data matches a corresponding identifying feature from the second-feature data; and modify access to one or more functions of the communication device based on the determination.

Example 2. The system of the previous example, wherein the first detector and the second detector detect identifying features of at least one of a face, a voice, a fingerprint, and an eye.

Example 3. The system of any of the previous examples, wherein the first detector is a component of a driver monitor system installed on the vehicle.

Example 4. The system of any of the previous examples, wherein the first detector comprises a first camera installed on the vehicle.

Example 5. The system of any of the previous examples, wherein the communication device is one of a mobile phone, a tablet, and a personal computer.

Example 6. The system of any of the previous examples, wherein the second detector comprises a second camera installed on the communication device.

Example 7. The system of any of the previous examples, wherein the controller circuit allows full access to the one or more functions of the communication device when the controller circuit determines that the first-feature data does not match the second-feature data.

Example 8. The system of any of the previous examples, wherein the controller circuit restricts access to the one or more functions of the communication device when the controller circuit determines that the first-feature data matches the second-feature data.

Example 9. The system of any of the previous examples, wherein the controller circuit is installed on the vehicle.

Example 10. The system of any of the previous examples, wherein the controller circuit is installed on the communication device.

Example 11. The system of any of the previous examples, wherein the controller circuit is located remotely from both the vehicle and the communication device.

Example 12. The system of any of the previous examples, wherein the communication device includes a third detector, and wherein the controller circuit further determines whether the driver is the user of the communication device based on environments detected by the second detector and the third detector.

Example 13. The system of any of the previous examples, wherein the environments include fields-of-view of the second detector and the third detector, the fields-of-view indicative of a seating position within the vehicle, and wherein the field-of-view of the second detector is different from the field-of-view of the third detector.

Example 14. A method, comprising: receiving, with a controller circuit, first-feature data generated by a first detector configured to detect identifying features of a driver of a vehicle; receiving, with the controller circuit, second-feature data generated by a second detector configured to detect identifying features of a user of a communication device; determining, with the controller circuit, whether an identifying feature from the first-feature data matches a corresponding identifying feature from the second-feature data; and modifying access, with the controller circuit, to one or more functions of the communication device based on the determination.

Example 15. The method of the previous example, including detecting the identifying features with the first detector and the second detector by detecting features of at least one of a face, a voice, a fingerprint, and an eye.

Example 16. The method of any of the previous examples, wherein the first detector is a component of a driver monitor system installed on the vehicle, and the first detector comprises a first camera installed on the vehicle.

Example 17. The method of any of the previous examples, wherein the communication device is one of a mobile phone, a tablet, and a personal computer, and the second detector comprises a second camera installed on the communication device.

Example 18. The method of any of the previous examples, including modifying access with the controller circuit by allowing full access to the one or more functions of the communication device when the controller circuit determines that the first-feature data does not match the second-feature data.

Example 19. The method of any of the previous examples, including modifying access with the controller circuit by restricting access to the one or more functions of the communication device when the controller circuit determines that the first-feature data matches the second-feature data.

Example 20. The method of any of the previous examples, wherein the controller circuit is installed on the vehicle.

Example 21. The method of any of the previous examples, wherein the controller circuit is installed on the communication device.

Example 22. The method of any of the previous examples, wherein the controller circuit is located remotely from both the vehicle and the communication device.

Example 23. The method of any of the previous examples, wherein the communication device includes a third detector, and wherein the controller circuit further determines whether the driver is the user of the communication device based on environments detected by the second detector and the third detector.

Example 24. The method of any of the previous examples, wherein the environments include fields-of-view of the second detector and the third detector, the fields-of-view indicative of a seating position within the vehicle, and wherein the field-of-view of the second detector is different from the field-of-view of the third detector.

Example 25. A system, comprising: a controller circuit configured to: receive first images from a first camera configured to capture images of a driver of a vehicle; receive second images from a second camera configured to capture images of a user of a communication device; determine whether the driver of the vehicle is the user of the communication device based on the first images and the second images; and modify access to one or more functions of the communication device when the driver is determined to be the user.

Example 26: A system comprising means to perform the methods of any preceding examples.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A method, comprising:
receiving, with a controller circuit, first-feature data generated by a first detector configured to detect identifying features of a driver of a vehicle;
receiving, with the controller circuit, second-feature data generated by a second detector configured to detect identifying features of a user of a communication device;
determining, with the controller circuit, whether an identifying feature from the first-feature data matches a corresponding identifying feature from the second-feature data; and
modifying access, with the controller circuit, to one or more functions of the communication device based on the determination.

2. The method of claim 1, including detecting the identifying features with the first detector and the second detector by detecting features of at least one of a face, a voice, a fingerprint, and an eye.

3. The method of claim 1 or 2, wherein the first detector is a component of a driver monitor system installed on the vehicle.

4. The method of any of claims 1-3, wherein the first detector comprises a first camera installed on the vehicle.

5. The method of any of claims 1-4, wherein the communication device is one of a mobile phone, a tablet, and a personal computer.

6. The method of any of claims 1-5, wherein the second detector comprises a second camera installed on the communication device.

7. The method of any of claims 1-6, including modifying access with the controller circuit by allowing full access to the one or more functions of the communication device when the controller circuit determines that the first-feature data does not match the second-feature data.

8. The method of any of claims 1-7, including modifying access with the controller circuit by restricting access to the one or more functions of the communication device when the controller circuit determines that the first-feature data matches the second-feature data.

9. The method of any of claims 1-8, wherein the communication device includes a third detector, and the method further comprising:
determining whether the driver is the user of the communication device based on environments detected by the second detector and the third detector.

10. The method of claim 9,
wherein the environments include fields-of-view of the second detector and the third detector,
wherein the fields-of-view is indicative of a seating position within the vehicle, and wherein the field-of-view of the second detector is different from the field-of-view of the third detector.

11. A system, comprising a controller circuit configured to perform the method of any of claims 1-10.

12. The system of claim 11, wherein the controller circuit is installed on the vehicle.

13. The system of claim 11, wherein the controller circuit is installed on the communication device.

14. The system of claim 11, wherein the controller circuit is located remotely from both the vehicle and the communication device.

15. A system comprising means to perform the methods of any of claims 1-10.
